# EUROPÄISCHE PATENTSCHRIFT

(11) **EP 3 657 036 B1**
(45) Veröffentlichungstag und Bekanntmachung des Hinweises auf die Patenterteilung: **20.12.2023**
(21) Anmeldenummer: 19205042.5
(22) Anmeldetag: 24.10.2019
(51) Int. Cl.: F16D 7/08, F16D 43/206

(54) **KUPPLUNGSANORDNUNG UND LUFTFAHRZEUG**
CLUTCH ASSEMBLY AND AIRCRAFT
AGENCEMENT D'ACCOUPLEMENT ET AÉRONEF

(30) Priorität: 21.11.2018 DE 102018129367
(43) Veröffentlichungstag der Anmeldung: 27.05.2020
(73) Patentinhaber: Liebherr-Aerospace Lindenberg GmbH, 88161 Lindenberg (DE)
(72) Erfinder: Bassett, Frederick, 88175 Scheidegg (DE); Gaile, Anton, 88299 Leutkirch (DE)
(74) Vertreter: Herrmann, Uwe

(56) Entgegenhaltungen:
- EP-A1- 1 236 920
- DE-A1- 3 232 182
- DE-A1- 19 826 664
- GB-A- 2 071 236
- GB-A- 2 165 899
- US-A- 2 818 712
- US-A- 3 998 565
- US-A- 4 029 429
- US-A- 4 062 203

## Beschreibung

Die vorliegende Erfindung betrifft ein Luftfahrzeug, insbesondere ein Flugzeug, mit einer Kupplungsanordnung für eine Antriebsvorrichtung, wobei die Kupplungsanordnung einen Antrieb, einen Abtrieb und eine Kupplung umfasst, wobei die Kupplung mit dem Antrieb oder mit dem Abtrieb zur Drehmomentübertragung drehfest in Verbindung steht, wobei die Kupplung ferner Drehmomentübertragungsmittel umfasst, die ausgebildet sind, im eingekuppelten Zustand den Abtrieb mit dem Antrieb zur Übertragung eines Drehmoments vom Antrieb zu dem Abtrieb zu verbinden.

Aus dem Stand der Technik sind Kupplungsanordnungen für Antriebsvorrichtungen, insbesondere bei Flugzeugen, bekannt, die ein Schutzsystem umfassen, das das Auftreten von unzulässigen hohen Drehmomentwerten verhindert. Dieses Schutzsystem dient dazu, den Abtrieb von dem Antrieb zu entkoppeln, wenn der Abtrieb mit einem zu hohen Drehmoment belastet wird. Diese großen Drehmomente könnten beispielweise dadurch entstehen, dass der Abtrieb bzw. ein damit verbundenes Bauteil, wie z.B. eine klappbare Flügelspitze klemmt.

Die aus dem Stand der Technik bekannten Schutzsysteme können mechanisch oder elektronisch ausgebildet sein. Bei mechanischen Schutzsystemen wird ein Anstieg des Antriebsdrehmoments erfasst. Beim Überschreiten eines Drehmomentschwellenwertes wird das Schutzsystem derart betätigt, dass das Antriebsdrehmoment als Wärme und/oder als elastische Verformung eines mechanischen Elements abgebaut wird. Dafür können verschiedene mechanische Vorrichtungen benutzt werden, wie beispielweise Drehmomentbegrenzer, Momentübertragungsbegrenzer oder Abscherstifte. Ein Beispiel eines Drehmomentbegrenzers ist in GB2165899A offenbart.

Bei Drehmomentbegrenzern wird das von dem Antrieb übertragene Drehmoment durch Reibungsscheiben abgebaut, sodass das zu übertragene Drehmoment begrenzt wird.

Bei Drehmomentübertragungsbegrenzern wird das Drehmoment durch Reibung mittels mechanischer Elemente in Form von Kupplungselementen abgebaut. Die Kupplungselemente werden leicht verschoben, sodass diese miteinander in Kontakt treten können und somit die Drehmomentübertragung begrenzen oder verhindern. Beim Einsatz eines Abscherstiftes wird das Drehmoment dadurch begrenzt, dass beim Übersteigen eines gewissen Schwellwertes des Drehmoments der Stift bricht, sodass der Antrieb von dem Abtrieb getrennt wird.

Bei elektronischen Schutzsystemen erfasst eine Kontrolleinheit das von dem Antrieb übertragene Drehmoment. Diese Kontrolleinheit ist derart ausgelegt, dass sie den Antrieb abschaltet, wenn das übertragene Drehmoment einen gewissen Wert übersteigt.

Nachteilig an den Stand der Technik ist es, dass die Antriebsvorrichtung blockiert wird, dass der der Antrieb von dem Abtrieb permanent getrennt wird und/oder dass der Abtrieb zurückgefahren werden muss, um das System wieder in Betrieb nehmen zu können.

Der vorliegenden Erfindung liegt daher die Aufgabe zugrunde, ein Luftfahrzeug mit einer Kupplungsanordnung der eingangs genannten Art zu schaffen, bei der das Drehmoment begrenzt wird, ohne dass der Antrieb und der Abtrieb permanent voneinander getrennt bleiben.

Diese Aufgabe wird durch ein Luftfahrzeug gemäß dem Anspruch 1 gelöst. Demnach sind die Drehmomentübertragungsmittel beim Überschreiten eines Drehmomentschwellenwerts in einem ersten Betriebszustand derart angeordnet, dass der Antrieb von dem Abtrieb periodisch getrennt und verbunden ist. Ferner sind die Drehmomentübertragungsmittel beim Unterschreiten des Drehmomentschellenwerts in einem zweiten Betriebszustand derart angeordnet, dass der Antrieb mit dem Abtrieb zur Übertragung eines Drehmoments permanent verbunden ist.

Somit ist es möglich, beim Überschreiten eines Drehmomentschwellenwertes den Antrieb von dem Abtrieb für eine kurze Zeitspanne zu entkoppeln. Anschließend erfolgt eine Einkopplung, sodass das Drehmoment zwischen Antrieb und Abtrieb übertragen werden kann. Klemmt der Abtrieb dann immer noch und wird der Drehmomentschwellenwert wieder überschritten, wird der Antrieb erneut von dem Abtrieb entkoppelt. Durch diese periodische Aus- und Einkupplung des Antriebs mit dem Abtrieb wird vorzugsweise gewährleistet, dass der Abtrieb in seiner Position blockiert bleibt, d.h. nicht zurückfährt, beispielsweise bedingt durch eine Windlast, und dass die Abtriebselemente von nicht durch ein zu großes Drehmoment beschädigt werden. Letztlich wird der Vorteil erreicht, dass die Drehmomentübertragung von dem Antrieb zu dem Abtrieb selbsttätig wiederhergestellt wird, wenn der Abtrieb nicht mehr klemmt bzw. anderweitig blockiert ist.

Im Falle eine Klemmstelle an der Klappe bzw. Flügelspitze öffnet sich die Kupplung bei einem weiterfahrenden Antrieb und verhindert, dass das Antriebsdrehmoment die Bauteile bis zur Klemmstelle beschädigt oder die Struktur bzw. die Klappe bzw. die Flügelspitze selbst beschädigt.

Die Kupplung ist drehfest unmittelbar oder mittelbar mit dem Antrieb oder mit dem Abtrieb verbunden. Vorzugsweise ist die Kupplung mit dem Abtrieb drehfest verbunden und relativ zu dem Antrieb drehbar gelagert.

Die Verbindung zwischen der Kupplung und dem Antrieb bzw. Abtrieb kann form- und/oder kraftschlüssig sein. Vorteilhaft ist die Verbindung durch Kerbverzahnungen ausgebildet.

Nach einer vorteilhaften Ausführungsform umfasst der Abtrieb der Kupplungsanordnung eine Antriebswelle, relativ zu der der Antrieb drehbar gelagert ist.

Erfindungsgemäß handelt es sich bei den Drehmomentübertragungsmitteln um eine Kugelrampe. Die Kugelrampe kann beispielweise als selbständiges mechanisches Element ausgebildet sein. Es ist jedoch vorteilhaft, wenn der Antrieb der Kupplungsanordnung ein Gehäuse aufweist, das sich mit dem Antrieb dreht und in dem die Kugelrampe als Ausnehmung ausgebildet ist. Alternativ oder zusätzlich kann vorgesehen sein, dass die Kugelrampe als Ausnehmung in einer Wandung der Kupplung ausgebildet ist.

Vorteilhaft ist es, wenn der Drehmomentschwellenwert durch die Neigung der Kugelrampe bestimmt und/oder einstellbar ist. Somit ist es möglich, den Drehmomentschwellenwert exakt definieren zu können.

Es ist besonders vorteilhaft, wenn die Kugelrampen derart ausgebildet sind, dass sie mehrere Rampen aufweisen, die derart zueinander angeordnet sind, dass eine Kugel sequentiell von einer Rampe in die nächste Rampe abrollen kann. Somit ist es möglich, die Aus- und Einkopplung des Antriebs mit dem Abtrieb durch das periodische Abrollen der Kugel von einer Rampe in die nächste Rampe einer Kugelrampe zu bewirken.

Ferner können die Kugelrampen eine oder mehrere Taschen aufweisen, in denen die Kugel derart aufnehmbar ist, dass eine Drehmomentübertragung stattfindet. Die Tasche ist derart angeordnet, dass die Kugel von der Tasche ausrollen kann. Befindet sich die Kugel in dem Bereich zwischen zwei Taschen, findet keine Drehmomentübertragung statt.

Vorzugsweise befinden sich die Taschen jeweils zwischen zwei Rampen einer Kugelrampe, so dass eine Abfolge von Rampen und Taschen vorliegt.

Der Drehmomentschwellenwert kann durch eine auf die Drehmomentübertragungsmittel wirkende vorgespannte Feder bestimmt werden und/oder durch diese einstellbar sein. Die vorgespannte Feder kann mittelbar oder unmittelbar auf die Drehmomentübertragungsmittel wirken.

Es kann gemäß der Erfindung vorgesehen sein, dass die Drehmomentübertragungsmittel derart angeordnet sind, dass in dem ersten Betriebszustand ein Zurückverfahren des Abtriebs durch das periodische Trennen und Verbinden des Abtriebs vom Antrieb verhindert wird, insbesondere dann, wenn dies mit hoher Frequenz stattfindet.

Die Kupplung weist erfindungsgemäß ein erstes Kupplungsteil, das drehfest mit dem Abtrieb verbunden ist und ein zweites Kupplungsteil auf, das relativ zu dem ersten Kupplungsteil axial beweglich ist.

Erfindungsgemäß ist ein Mitnehmer vorgesehen, der sich zwischen dem ersten und dem zweiten Kupplungsteil erstreckt und der die beiden Kupplungsteile derart verbindet, dass die Drehbewegung des zweiten Kupplungsteils zu einer Drehbewegung des ersten Kupplungsteils führt.

Die Erfindung betrifft ferner ein Luftfahrzeug, insbesondere Flugzeug, mit einer Kupplungsanordnung gemäß einem der Ansprüche 1 bis 7.

Die Kupplungsanordnung kann sich zwischen einem Antrieb des Luftfahrzeuges und einer klappbaren Flügelspitze bzw. Wing Tip Folding System und/oder einer Auftriebshilfe bzw. Highliftsystem und/oder einem primären und/oder sekundären elektromechanischen Aktuatorsystem bzw. primary and/or secondary electromechanical actuation system (EMA-system) und/oder einem Schubumkehraktuatorsystem bzw. thrust reversal actuation system (TRAS) und/oder einem Schubumkehrverdecksbetätigungssystem bzw. thrust cowling actuation system und/oder einem Türbetätigungssystem bzw. blocker door actuation system und/oder einem Turbinenschaufelbetätigungssystem bzw. vane actuation system befinden.

An dieser Stelle wird darauf hingewiesen, dass die Begriffe "ein" und "eine" nicht zwingend genau eines der fraglichen Elemente bezeichnen, wenngleich dies eine mögliche Ausführungsform darstellt, sondern auch für eine Mehrzahl der Elemente stehen können. Entsprechendes gilt für die Verwendung des Plurals, der auch nur eines der Elemente umfassen kann und umgekehrt für die Verwendung des Singulars, der auch mehrere Elemente bezeichnen kann.

Weitere Merkmale und Vorteile der Erfindung werden anhand eines in der Figur dargestellten Ausführungsbeispiels näher erläutert.

Es zeigen:

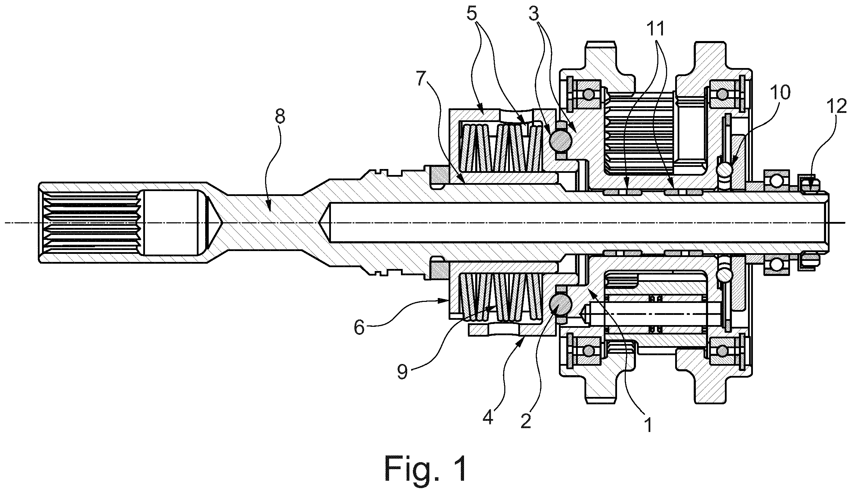

Figur 1: Kupplungsanordnung gemäß der Erfindung und
Figur 2: schematische Ansichten der Kugelrampen mit Kugel.

Ein Antrieb 1 ist relativ zu einem Abtrieb 8 mittels der Lager 10 und 11 drehbar gelagert. Zur Drehmomentübertragung von dem Antrieb 1 zum Abtrieb 8 ist eine Kupplung vorgesehen. Diese weist ein erstes Kupplungsteil 6, das drehfest mit dem Abtrieb 8 in Verbindung steht, und ein zweites Kupplungsteil 4 auf, das relativ zu dem Abtrieb 8 drehbar ist. Die Verbindung zwischen dem ersten Kupplungsteil 6 und dem Abtrieb 8 ist durch Kerbverzahnungen 7 ausgebildet.

Das Axiallager 10 mit der Gewindemutter 12 vervollständigt an dem ersten Kupplungsteil 6 den Lastkreis zwischen sich selbst und dem Lager bzw. der Abstützung an dem Abtrieb 8.

Der Antrieb 1 steht mit dem zweiten Kupplungsteil 4 erfindungsgemäß mittels eines Kugelrampenmechanismus in Verbindung. Dieser Kugelrampenmechanismus bildet die Drehmomentübertragungsmittel oder einen Teil von diesen.

Der Kugelrampenmechanismus weist zwei gegenüberliegende Kugelrampen auf, von denen eine in dem Gehäuse des Antriebs 1 und die andere in dem zweiten Kupplungsteil 4 angeordnet ist. Zwischen den beiden Kugelrampen sind eine oder mehrere Kugeln 2 angeordnet.

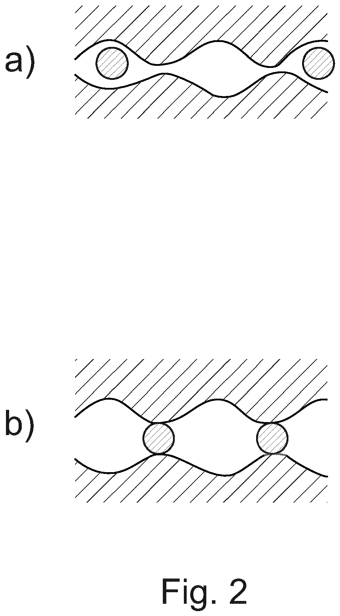

Eine oder beide Kugelrampen weisen eine oder mehrere schräg verlaufende Rampen für die Kugeln und eine oder mehrere sich daran anschließende Taschen oder sonstige Vertiefungen auf. Befinden sich die Kugeln in den Taschen, wie dies in Figur 2 a) gezeigt ist, wird ein Drehmoment übertragen, wie dies auch im normalen Betriebszustand der Fall ist. Befinden sich die Kugeln auf den Rampen, d.h. nicht in den Taschen, wie dies in Figur 2 b) gezeigt ist, erfolgt keine Drehmomentübertragung, befinden

Ist der Abtrieb blockiert, z.B. durch einen Klemmfall der Flügelspitze, wandern die Kugeln immer von einer Tasche zur nächsten. Durch dieses ständige Weiterwandern (Durchrutschen) wird Energie vernichtet.

Eine Feder 9 erstreckt sich zwischen dem ersten Kupplungsteil 6 und dem zweiten Kupplungsteil 4. Ein Mitnehmer 5 erstreckt sich ebenfalls zwischen dem ersten Kupplungsteil 6 und dem zweiten Kupplungsteil 4. Der Mitnehmer 5 verbindet die zwei Kupplungsteile 4 und 6 derart, dass die Drehbewegung des zweiten Kupplungsteils 4 zu einer Drehbewegung des ersten Kupplungsteils 6 führt.

Durch die Feder 9 ist es möglich, eine bestimmte Kraft, die durch die Eigenschaften der Feder 9 vorgegeben ist, auf die Kugelrampe wirken zulassen.

Im Normalbetrieb (d.h. in dem anspruchsgemäßen zweiten Betriebszustand) bewirkt die Feder 9, dass die Kugelrampe geschlossen bleibt und dass ein Drehmoment von dem Antrieb 1 über den Kugelrampenmechanismus an den Abtrieb 8 übertragen wird. Der Mitnehmer 5 sorgt dafür, dass die Drehmomentübertragung auch bei teilweise eröffneter Kugelrampe stattfinden kann. Dies ist beispielweise der Fall, wenn der Antrieb 1 ein erhöhtes Drehmoment abgibt und sich der Abtrieb 8 nicht sofort an das erhöhte Drehmoment anpassen kann.

Wenn der Abtrieb 8 klemmt oder verlangsamt wird, etwa weil eine mit dem Abtrieb verbundene Klappe klemmt oder anderweitig blockiert ist, bleibt das antriebsseitige Drehmoment erhalten, was bedingt durch den Klemm- oder Blockadezustand zu einer Beschädigung der Kupplungsanordnung oder eines abtriebsseitig angeordneten Teils führen kann.

Wenn das Drehmoment einen durch die Feder 9 und den Kugelrampenmechanismus definierten Drehmomentschwellenwert übersteigt, öffnet sich die Kugelrampe, d.h. der Abstand der Kugelrampen in axialer Richtung nimmt zu, und das zweite Kupplungsteil 4 bewegt sich in Richtung des ersten Kupplungsteils 6, wobei die Feder 9 komprimiert wird.

Wenn die Kugelrampe komplett geöffnet ist, stehen die Kugeln 2 zwischen den Taschen, sodass die Drehmomentübertragung komplett unterbrochen wird. Anschließend rollen die Kugeln 2 in den Rampen runter und in die Taschen, sodass sich der Antrieb 1 und der Abtrieb 2 wieder in eingekuppeltem Zustand befinden.

Der Antrieb 1 überträgt dann wieder ein Drehmoment an den Abtrieb 8. Sollte der Abtrieb 8 noch immer klemmen, wiederholt sich der oben ausgeführte Vorgang, d.h. es wird erneut ausgekuppelt, indem die Kugeln aus den Taschen ausrollen.

Durch das periodische Aus- und Einkuppeln wird erreicht, dass der Abtrieb 8 seine Position hält und nicht zurückverfahren wird. Gleichzeitig wird das Auftreten von zu hohen Drehmomentwerten verhindert.

## Patentansprüche

1. Luftfahrzeug, insbesondere Flugzeug mit einer Kupplungsanordnung für eine Antriebsvorrichtung einer Flügelspitze, wobei
die Kupplungsanordnung einen Antrieb (1), einen Abtrieb (8) und eine Kupplung umfasst,
die Kupplung mit dem Antrieb (1) oder mit dem Abtrieb (8) drehfest in Verbindung steht,
die Kupplung ferner Drehmomentübertragungsmittel umfasst, die ausgebildet sind, im eingekuppelten Zustand den Abtrieb (8) mit dem Antrieb (1) zur Übertragung eines Drehmoments vom Antrieb (1) zu dem Abtrieb (8) zu verbinden,
die Drehmomentübertragungsmittel beim Überschreiten eines Drehmomentschwellenwerts in einem ersten Betriebszustand derart angeordnet sind, dass der Antrieb (1) von dem Abtrieb (8) periodisch getrennt und verbunden ist, und
die Drehmomentübertragungsmittel beim Unterschreiten des Drehmomentschellenwerts in einem zweiten Betriebszustand derart angeordnet sind, dass der Antrieb (1) mit dem Abtrieb (8) zur Übertragung eines Drehmoments permanent verbunden ist,
**dadurch gekennzeichnet, dass**
es sich bei den Drehmomentübertragungsmitteln um eine Kugelrampe handelt,
die Kupplung ein erstes Kupplungsteil (6), das drehfest mit dem Abtrieb (8) verbunden ist, und ein zweites Kupplungsteil (4), das relativ zu dem ersten Kupplungsteil (6) axial beweglich ist, aufweist,
ein Mitnehmer (5) vorgesehen ist, der sich zwischen dem ersten Kupplungsteil (6) und dem zweiten Kupplungsteil (4) erstreckt und die beiden Kupplungsteile derart verbindet, dass die Drehbewegung des zweiten Kupplungsteils (4) zu einer Drehbewegung des ersten Kupplungsteils (6) führt, und
der Antrieb (1) mit dem zweiten Kupplungsteil (4) mittels eines Kugelrampenmechanismus in Verbindung steht.

2. Luftfahrzeug nach Anspruch 1, **dadurch gekennzeichnet, dass** die Kugelrampen derart ausgebildet sind, dass sie mehrere Rampen aufweisen, die derart zueinander angeordnet sind, dass eine Kugel sequentiell von einer Rampe in die nächste Rampe abrollen kann.

3. Luftfahrzeug nach Anspruch 2, **dadurch gekennzeichnet, dass** die Kugelrampen eine oder mehrere Taschen aufweisen, in denen die Kugel derart aufnehmbar ist, dass eine Drehmomentübertragung stattfindet.

4. Luftfahrzeug nach einem der vorherigen Ansprüche, **dadurch gekennzeichnet, dass** der Drehmomentschwellenwert durch eine auf die Drehmomentübertragungsmittel wirkende vorgespannte Feder bestimmt wird und/oder durch diese einstellbar ist.

5. Luftfahrzeug nach einem der vorhergehenden Ansprüche, **dadurch gekennzeichnet, dass** sich die Kupplungsanordnung zwischen einem Antrieb (1) des Luftfahrzeuges und einer klappbaren Flügelspitze und/oder einer Auftriebshilfe und/oder einem primären und/oder sekundären elektromechanischen Aktuatorsystem und/oder einem Schubumkehraktuatorsystem und/oder einem Schubumkehrverdeckungsbetätigungssystem und/oder einem Türbetätigungssystem und/oder einem Turbinenschaufelbetätigungssystem befindet.

## Claims

1. Aircraft, in particular airplane comprising a coupling arrangement for a driving device of a wing tip, wherein
the coupling arrangement comprises an input (1), an output (8) and a coupling,
the coupling is connected with the input (1) or with the output (8) in a corotational manner,
the coupling furthermore comprises torque transmission means which in the coupled condition are configured to connect the output (8) with the input (1) for transmitting a torque from the input (1) to the output (8),
upon exceedance of a torque threshold value in a first operating condition the torque transmission means are arranged such that the input (1) is periodically separated from and connected with the output (8), and
when the torque threshold value is not reached in a second operating condition, the torque transmission means are arranged such that the input (1) is permanently connected with the output (8) for transmitting a torque,
**characterized in that**
the torque transmission means are a ball ramp,
the coupling includes a first coupling element (6) which is non-rotatably connected with the output (8) and a second coupling element (4) which is axially movable relative to the first coupling element (6),
a entrainment member (5) is provided, which extends between the first coupling part (6) and the second coupling part (4) and which connects the two coupling parts such that the rotary movement of the second coupling part (4) leads to a rotary movement of the first coupling part (6), and
the input (1) is connected to the second coupling part (4) by means of a ball ramp mechanism.

2. Aircraft according to claim 1, **characterized in that** the ball ramps are configured such that they comprise a plurality of ramps which are arranged relative to each other such that a ball can sequentially roll off from one ramp into the next ramp.

3. Aircraft according to claim 2, **characterized in that** the ball ramps comprise one or more pockets in which the ball can be received such that a torque transmission takes place.

4. Aircraft according to any of the preceding claims, **characterized in that** the torque threshold value is determined by a pretensioned spring acting on the torque transmission means and/or is adjustable by said spring.

5. Aircraft according to any one of the preceding claims, **characterized in that** the coupling arrangement is disposed between an input (1) of the aircraft and a foldable wing tip and/or a buoyancy aid and/or a primary and/or secondary electromechanical actuation system and/or a thrust reversal actuation system and/or a thrust reversal cowling actuation system and/or a door actuation system and/or a turbine vane actuation system.

## Revendications

1. Aéronef, notamment avion, avec un agencement d'accouplement pour un dispositif d'entraînement d'une extrémité d'aile,
l'agencement d'accouplement comprenant un entraînement (1), une sortie (8) et un accouplement,
l'accouplement étant relié à l'entraînement (1) ou à la sortie (8) de manière solidaire en rotation,
l'accouplement comprenant en outre des moyens de transmission de couple qui sont configurés, dans l'état accouplé, pour relier la sortie (8) à l'entraînement (1) pour transmettre un couple de l'entraînement (1) à la sortie (8),
les moyens de transmission de couple étant agencés, lors du dépassement d'une valeur de seuil de couple dans un premier état de fonctionnement, de telle sorte que l'entraînement (1) est périodiquement séparé de la sortie (8) et relié à celle-ci, et
les moyens de transmission de couple étant agencés, lors du dépassement vers le bas de la valeur de seuil de couple dans un deuxième état de fonctionnement, de telle sorte que l'entraînement (1) est relié en permanence à la sortie (8) pour transmettre un couple,
**caractérisé en ce que**
les moyens de transmission de couple consistent en une rampe à billes,
l'accouplement présente une première partie d'accouplement (6) qui est reliée à la sortie (8) de manière solidaire en rotation et une deuxième partie d'accouplement (4) qui est mobile axialement par rapport à la première partie d'accouplement (6),
un entraîneur (5) est prévu, qui s'étend entre la première partie d'accouplement (6) et la deuxième partie d'accouplement (4) et relie les deux parties d'accouplement de telle sorte que le mouvement de rotation de la deuxième partie d'accouplement (4) conduit à un mouvement de rotation de la première partie d'accouplement (6), et
l'entraînement (1) est relié à la deuxième partie d'accouplement (4) au moyen d'un mécanisme de rampe à billes.

2. Aéronef selon la revendication 1, **caractérisé en ce que** les rampes de billes sont configurées de telle sorte qu'elles présentent plusieurs rampes agencées les unes par rapport aux autres de telle sorte qu'une bille peut rouler séquentiellement d'une rampe à la rampe suivante.

3. Aéronef selon la revendication 2, **caractérisé en ce que** les rampes de billes présentent une ou plusieurs poches dans lesquelles la bille peut être logée de telle sorte qu'une transmission de couple a lieu.

4. Aéronef selon l'une quelconque des revendications précédentes, **caractérisé en ce que** la valeur de seuil de couple est déterminée par un ressort précontraint agissant sur les moyens de transmission de couple et/ou peut être ajustée par celuici.

5. Aéronef selon l'une quelconque des revendications précédentes, **caractérisé en ce que** l'agencement d'accouplement se trouve entre un entraînement (1) de l'aéronef et une extrémité d'aile repliable et/ou un auxiliaire hypersustentateur et/ou un système d'actionnement électromécanique primaire et/ou secondaire et/ou un système d'actionnement d'inverseur de poussée et/ou un système d'actionnement de capote d'inverseur de poussée et/ou un système d'actionnement de porte et/ou un système d'actionnement d'aube de turbine.
